# EUROPÄISCHE PATENTANMELDUNG

(11) **EP 0 664 656 A2**
(43) Veröffentlichungstag der Anmeldung: **26.07.1995**
(21) Anmeldenummer: 94117980.6
(22) Anmeldetag: 15.11.1994
(51) Int. Cl.: H04Q 11/04, H04Q 1/14

(54) **Digitaler elektronischer Zwischenverteiler für Nachrichten- und Datenübertragungssysteme**

(30) Priorität: 23.12.1993 US 172557
(71) Anmelder: KRONE Aktiengesellschaft, D-14167 Berlin (DE)
(72) Erfinder: Fowler, Charles, Sinking Spring, PA 19608 (US); Orr, Kenneth A., Wernersville, Pa 19565 (US); Grandstaff, Lawrence, Mohrsville, PA 19541 (US)

(57) **Zusammenfassung**

Die Erfindung bezieht sich auf einen digitalen elektronischen Zwischenverteiler für Telefon- und Datenübertragungssysteme. Es soll ein Zwischenverbinder entwickelt werden, der flexibel ist und eine paarweise Zwischenverbindung sowie eine zusätzliche Basis für weitere Anwendungen gewährleistet. Hierzu weist der digitale Zwischenverbinder eine Vielzahl von Line-Cards 20, einschließlich von mit einer Netzleitung 15 verbundenen Line-Cards 20 und mit einer Teilnehmerleitung 12 verbundenen Line-Cards 20 auf. Die Netzleitung 15 und die Teilnehmerleitung 12 übertragen Signale mit einem Datenteil und einem Statussignalteil. Eine Signaltrennmittel 40 dient zum Abtrennen des Datenteils vom Statussignalteil. Ein Codierer 41 dient zum Codieren des Statussignalteils, um Statussignal-Bit-Pakete auf der Grundlage der empfangenen Statussignale zu liefern. Ein Statussignal-Zeitkanal-Austausch dient zum Empfangen der Status-Signal-Bit-Pakete und zum Aussenden der Statussignal-Bit-Pakete auf der Grundlage von zugeordneten Zeitkanälen zu einer weiteren Line-Card 20. Das Statussignal-Zeitkanal-Austauschmittel weist einen Verbindungsspeicher 206 mit den Zeitkanälen entsprechenden Adressenpositionen und einen Speicher 202, 204 mit zwei Anschlüssen zum Empfangen der Statussignal-Bit-Pakete und zum Schreiben der Bit-Pakete auf der Grundlage der Adressenpositionen des Verbindungsspeichers 206 auf.

## Beschreibung

Die Erfindung bezieht sich auf einen digitalen elektronischen Zwischenverteiler für Nachrichten- und Datenübertragungssysteme und auf ein Verfahren für die Nachrichten- und Datenübertragung.

Telefonsysteme übertragen Informationen von einer Vermittlungsstelle zu den Telefonteilnehmern. Die Informationen enthalten den Status der Teilnehmerschleife,"frei/besetzt", und Sprach- oder Datensignale, die von diversen Teilnehmern stammen oder an sie übertragen werden. Die Kommunikationsleitungen verlaufen im allgemeinen von der Vermittlungsstelle zu einem Verteiler-Interface, das auch Zwischenverteiler genannt wird. Bei bekannten Vorrichtungen stellt dieser Zwischenverteiler eine elektrisch leitende Verbindung von der Vermittlungsstelle zum Teilnehmer her. Auf Anforderung durch den Teilnehmer oder auf einen Dienstbefehl von der Vermittlungsstelle führen Änderungen an der Verbindung zum Zwischenverteiler zu physikalischen Änderungen der Verdrahtung in der Vorrichtung. Es ist bei den bekannten Bauformen von Zwischenverteilern relativ aufwendig, eine Änderung in der elektrischen Verbindung zwischen einem Teilnehmer und der Vermittlungsstelle durchzuführen.

Das US-Patent 4,520,234 offenbart ein Kabelschaltsystem, das ein logisches Feld und eine Schaltmatrix mit einer Aufzeichnung des gegenwärtigen Matrixzustands des Schalt-Untersystems benutzt. Das Schaltmatrix-Modul wird durch eine Vielzahl von Relais gebildet.

Das US-Patent 4,539,564 offenbart eine zentrale Matrix, die aus einer Vielzahl von Halbleiter- Analogschaltern gebildet ist.

Das US-Patent 4,525,605 offenbart ebenfalls ein System, das Relais zum Zugang zu den Telefonleitungen benutzt.

Das US-Patent 3,562,435 offenbart ein Schaltsystem mit einem automatischen Hauptverteiler. Das System enthält einen Netz-Steuerkreis zum Steuern eines zwischen den Telefonleitungen angebrachten Schaltnetzes mit Relais.

Von daher ist es Aufgabe der Erfindung, einen flexiblen elektronischen digitalen Zwischenverteiler für Nachrichten- und Datenübertragungssysteme zu schaffen, mit dem eine paarweise Zwischenverteilung möglich ist und der eine zusätzliche Basis für weitere Anwendungen liefert, wie beispielsweise ein Schleifen-Interface für besondere Dienste, eine Vorfeldeinrichtung für Telefonausrüstungen, eine Schleifenerweiterung, besondere Dienste, Fernleitungseinrichtungen, (integrierter Netzzugang, INA) und den Einsatz von Fasern in den Schleifen, wobei derartige Funktionen in einer einzigen Einheit integriert sein sollen, die wunschgemäß umkonfiguriert werden kann. Es ist ferner Aufgabe, ein Verfahren für die Nachrichten- und Datenübertragung anzugeben.

Die Lösung dieser Aufgabe ergibt sich aus den kennzeichnenden Merkmalen des Anspruches 1. Gemäß der Erfindung ist ein Zwischenverteiler für die Verbindung von Sprachkreisen zwischen Eingangs- und Ausgangsanschlüssen vorgesehen, wie z.B. einem Anschluß mit einem Teilnehmer und einem Anschluß mit einer Vermittlungsstelle. Jeder Anschluß eines Teilnehmers ist mit einer Line-Card oder einem an einer Leitung eines Zwischenverteilers angeordneten Teilnehmer-Interface-Modul (SIM) verbunden. In gleicher Weise sind die mit der Vermittlungsstelle verbundenen Anschlüsse an einer anderen Line-Card oder einem ebenfalls an einer Leitung eines Zwischenverteilers angeordneten Netz-Interface-Modul (NIM) vorgesehen. Die Line-Cards (Hybride) wandeln die analogen Signale in digitale Signale um, die von dem Zwischenverteiler verarbeitet werden. Zusätzlich können digitale Interface-Anschlüsse vorgesehen sein (vorzugsweise mit vier digitalen Line-Cards), die eine Verbindung mit einer Datenkommunikations-Leitung herstellen, die komprimierte digitale Daten überträgt. Die Line-Cards sind mit einer Interface-Einheit für einen Sprachfrequenz-Zeitkanal zum Koppeln von Netz-Sprachfrequenz-Signalen mit Teilnehmer-Sprachfrequenz-Signalen (und umgekehrt) verbunden. Die Signalisier-Zeitkanal-Interface-Einheit ist ebenfalls zum Verbinden von Schleifen-Signalisierungs-Daten von Netz-Line-Cards mit dem Teilnehmer-Line-Cards (und umgekehrt) vorgesehen.

Das Signalisier-Zeitkanal-Interface (TSI) enthält einen oder mehrere Speicher mit zwei Anschlüssen (Speicher mit wahlfreiem Zugriff, RAM), die über einen sequentiellen Zähler gesteuert werden. Nach dem alle Zeitkanäle geladen sind, werden die eingehenden Signalisierungs-Daten durch einen Wert aus einer Nachschlagtabelle ersetzt, der dann als neues Signal (kodiert auf die ausgehende Leitung) in eine Adressentabelle geschrieben wird (Daten-Grooming). Der Mikroprozessor kann die Daten auch direkt in die ausgehende Adresse schreiben (kein Daten-Grooming). Die Daten verlassen die Nachschlagtabelle und werden in eine Adressentabelle gespeichert, bevor sie zur ausgehenden Line-Card gelangen.

Gemäß einem weiteren Aspekt der Erfindung wird ein Hardware-Interrupt-Kreis den Nachschlagtabellen hinzugefügt, um dem Mikroprozessor mitzuteilen, daß ein illegales Datenpaket von den Nachschlagtabellen empfangen wurde. Da die eingehenden Daten Signalisierungs-Daten sind (die den Status einer Leitung, wie beispielsweise der Teilnehmerleitung, darstellen), liefert der Hardware-Interrupt-Kreis einen Mechanismus zum Erfassen von Fehlern. Die Software kann dieses Fehlererfassungs-Schema nutzen, indem die beiden oberen Bits einer gültigen Datenadresse mit Einsen geladen werden und eine ungültige Datenadresse mit einer Null in jeder Position geladen wird. Falls die "Null" mit der höchsten Position geladen wird, wird ein Interrupt am hohen Niveau ausgelöst. Falls die "Null" in die nächst höhere Position geladen wird, wird ein Interrupt am niedrigen Niveau ausgelöst. Der Interrupt-Kreis kann für jede Zwischenverbindung unwirksam gemacht werden, bei der der Interrupt am hohen Niveau nach Auftreten eines Interrupts maskiert werden kann, um eine Erkennung der Rückkehr zu einem normalen Interrupt-Zustand zu ermöglichen (wenn beispielsweise eine Line-Card entfernt und ersetzt wird).

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles näher erläutert. Es zeigen:
- Fig. 1: eine schematische Ansicht eines Telefonnetzes mit Teilnehmern, mit einer Vermittlungsstelle, mit einem Zwischenverteiler,
- Fig. 2: die schematische Darstellung der Bus- und Kommunikationsarchitektur,
- Fig. 3: das Blockschaltbild der Verbindungen durch die Line-Card zu dem Signalzeitkanal-Interface,
- Fig. 4: das Blockschaltbild einer digitalen Interface-Card für die komprimierte digitale Signale übertragenden Datenkommunikations-Leitungen,
- Fig. 5: das Blockschaltbiid der Verbindung mit der digitalen Gruppensteuerung,
- Fig. 6: das Blockschaltbild der Komponenten der Zeitkanal-Interface-Einheit,
- Fig. 7: ein Diagramm einer ersten Hälfte eines Zeitkanal-Austausches und
- Fig. 8: ein Diagramm der zweiten Hälfte eines Zeitkanal-Austauschs.

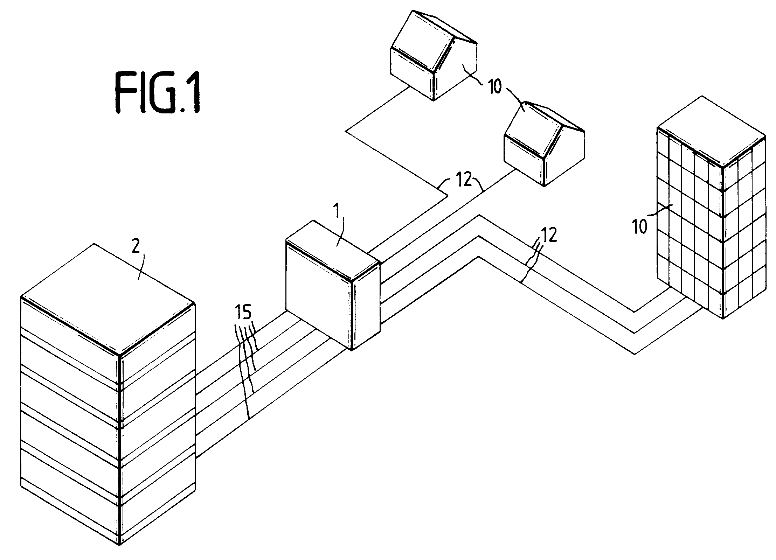

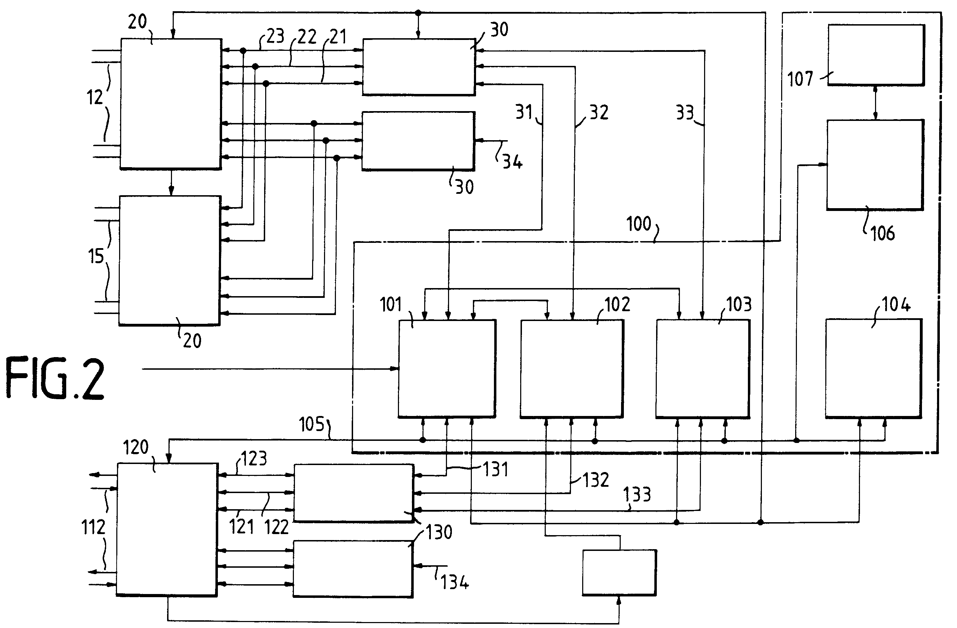

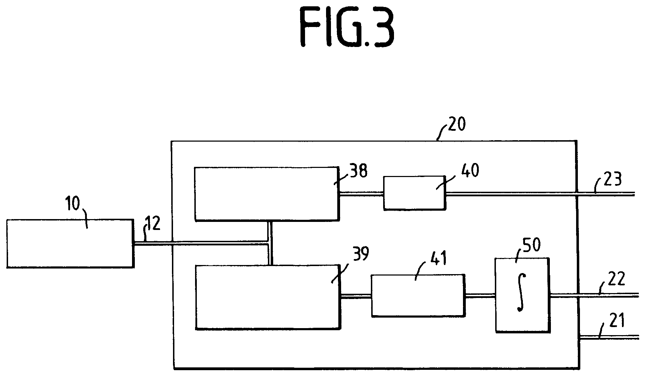

In der Figur 1 ist ein Zwischenverteiler 1 zum Schalten und Überwachen der Datenvermittlung über einzelne Netzleitungen 15 und Teilnehmerleitungen 12 gezeigt. Es sind Teilnehmerleitungen 12 vorgesehen, die jeweils mit einem Teilnehmer 10 und einer Line-Card 20 verbunden sind. Die Versorgung der Leitungen 12 und die Überwachung des Schleifenstroms erfolgt über die Line-Card 20 (Fig.2,3). In der Fig.3 wird gezeigt, daß das Signal vom Teilnehmer 10 oder der Vermittlungsstelle 2, falls die Line-Card 20 mit den Netzleitungen 15 verbunden ist, in der Line-Card 20 aufgetrennt wird. Der Datenanteil, gewöhnlich der Sprachanteil, wird von dem Datenabtrenner 38 zu einem Analog/Digital-Wandler 40 geleitet, die in dem Statussignalabtrenner 39 abgetrennten Statussignale werden zu einem Codierer/Decodierer 41 geleitet. Der Codierer 41 wandelt die Statussignale in 8-Bit-Pakete oder Bytes mit 8 kHz um. Vorzugsweise hat jedes Statussignal seine eigene Bit-Adresse, die Daten in dieser Bit-Adresse zeigen an, ob das Statussignal vorhanden ist oder nicht. Die 8-Bit-Pakete oder Bytes können zu einem Integrator 50 zur Behandlung weitergeleitet werden. Der Integrator 50 integriert die Statussignale oder mittelt sie aus, um Rauschspitzen zu entfernen, die sonst als fehlerhafter Nachrichtenverkehr erscheinen würden. Die Integration oder Ausmittelung kann über ein sich konstant bewegendes Fenster geschehen, oder die Statussignale können auf eine niedrigere Rate integriert oder ausgemittelt werden. Die Integration beseitigt Falschinterpretationen der Leitungssignale während der späteren Verarbeitung. Entsprechend werden durch diese Verarbeitung die Signale von der Line-Card 20 in Ereignismeldungen umgewandelt, die über die Kanäle 21,22,23 u.a. zu einem Anrufprozessor geführt werden, der eine gut funktionierende Organisation für jede der diversen Leitungen aufweist.

Die 8-Bit-Pakete oder Bytes werden von der Line-Card 20 zu einem Signalisier-TSI 102 (Zeitkanal-Interface) geführt. Das Signalisier-TSI 102 leitet die eingehenden Statussignale auf die korrekte ausgehende Leitung mit dem korrekten Zeitkanal um. Diese Umleitung erfolgt über zugewiesene Leitungen unter Steuerung durch die Vermittlungsstelle 2.

Die Fig. 2 zeigt die Systemarchitektur mit Line-Cards 20 mit zweiunddreißig analogen Interface-Anschlüssen zur Verarbeitung der Signale von den Teilnehmerleitungen 12 und Line-Cards 20 mit zweiunddreißig analogen Interface-Anschlüssen zur Verarbeitung der Signale von den Netzleitungen 15 sowie die Hauptsteuereinheit 104 und die verbindenden Kommunikationskanäle.

Das System basiert auf einer zentralen Bearbeitung, die von Steuermodulen unterstützt wird, welche an dem gemeinsamen Steuerpunkt der Steuereinheit 100 angeordnet sind. Alle nicht an der gemeinsamen Steuereinheit 100 angeordneten sekundären Prozessoren sind untergeordnet und werden durch mehrere interne Kommunikationsbusse gesteuert, die ebenfalls in der Figur 2 gezeigt sind.

Die Sprachverarbeitung erfolgt in der Zeitkanal-Interface-Einheit 103 für die Sprachfrequenz (VF). Die Verarbeitung ist nichtaufschaltend und liefert eine Zwischenverbindung der Sprachkreise zwischen den Anschlüssen. Ein Testmuster kann von einem Sprach-PCM-Signal (Pulscodemodulierung) zwecks Rückkopplungstest eingebracht und herausgeführt werden.

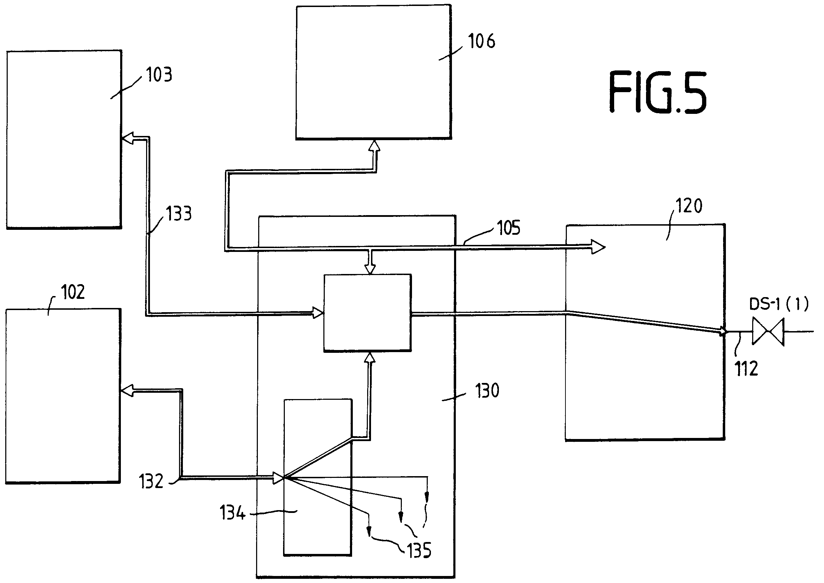

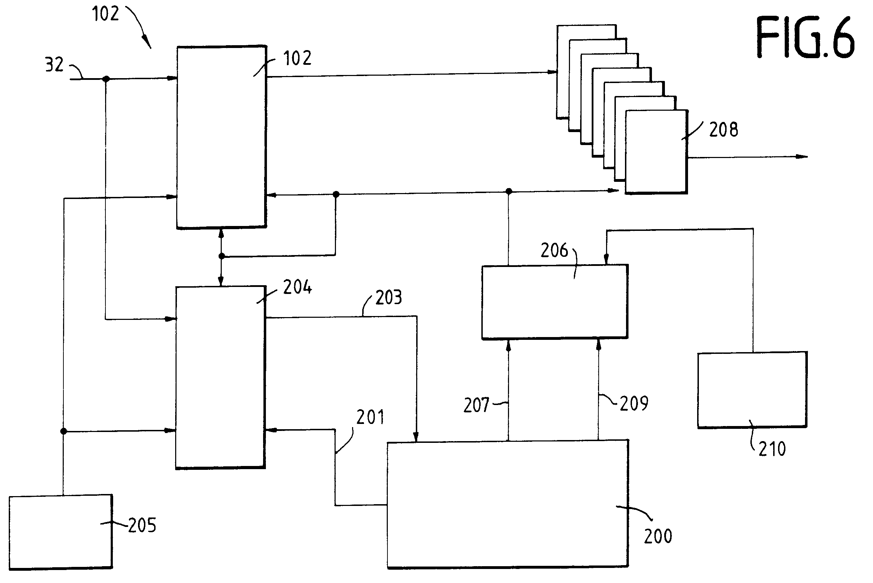

Die Leitungskreis-Signalisierung wird abgefragt und über einen lokalen Prozessor 200 auf das Signalisier-TSI 102 gebracht ( Fig.5,6). Der Zustand des Leitungskreises wird über NIM- und SIM-Statusregister beobachtet (NIM bedeutet Netz-Interface-Module, SIM bedeutet Teilnehmer-Interface-Module). Ein Bit-Pack-Schema ist vorgesehen, das eine Beobachtung und einen Sendeaufruf der Statusregister im Signalisier-TSI 102 durch einen lokalen Prozessor 200 erlaubt. Das SIM-Statusregister zeigt den Zustand des Hörerschalters und das Vorhandensein der Ringerdung an. Das NIM-Statusregister zeigt Schleifenerfassung vorwärts und rückwärts, Anwesenheit von Stecker- oder Ringerdung und die Funktion "Läuten" an.

Die Fig. 2 zeigt die Kommunikationsarchitektur des Systems einschließlich des Kommunikationsbusses 105. Der Kommunikationsbus 105 verbindet die Hauptsteuereinheit 104, die digitale Gruppensteuerung 130, die Zeitkanal-Interface-Einheit 103, die Signalisier-TSI-Einheit 102 und das Bedienungs-Interface 106 mit der Frontplatte 107.

Das System wird vorzugsweise mit vollständiger Redundanz mittels eines redundanten Moduls mit einer Busstruktur ausgeführt, die identisch zu der oben beschriebenen ist (zwei getrennte Systeme A und B). Das Gruppensteuerungsmodul 30 für das System A ist identisch mit dem Gruppensteuerungsmodul 33 für das System B. In der Fig.2 ist das zum System A identische System B nur bis zum Anschluß 34 dargestellt.

Der Kommunikationsbus 105 ist sehr zeitkritisch und ist die Haupt-Kommunikation in der gemeinsamen Steuereinheit 100. Dieser Bus 105 wird als Ethernet-Netz in einer Hub-Konfiguration ausgeführt. Dieser Bus 105 wird für das A- und das B-System der gemeinsamen Steuereinheit 100 dupliziert. Ethernet kann als "Logical-Pipe", als Datagramm- oder Rundfunk-Modus-Bus eingesetzt werden. Die "Digital-Bank"-Steuerungen 130 in der DS1-Bank sind vorzugsweise über den Kommunikationsbus 105 erreichbar.

Die Verwendung des Kommunikationsbusses 105 für das System A und eines identischen Busses für das System B, wobei zwei diskrete Ethernets-Hubs vorgesehen sind, stellt sicher, daß die A- und die B-Seite der gemeinsamen Steuereinheit 100 wirklich unabhängig sind und über die Hardware keine gegenseitigen Kommunikationsprobleme entstehen können. Die Test- und Konfigurationsmodule 101 übertragen und empfangen Nicht-Echtzeit-Informationen von den Line-Cards 20.

Das C- und T-Verbindungs-Interface (Konfigurieren und Testen) ist ein 2 Mb/s-Steuer-Interface, das für jede Line-Card 20 vorgesehen ist. Das C- und T-Interface ist zum Gruppensteuerungs-Modul 30 geführt und wieder auf sieben einzelne 2 Mb/s-Interfaces verteilt. Diese sieben Kanäle werden auf die Line-Cards 20 verteilt. Die C- und T-Kanäle 21,31 werden dazu benutzt, Konfigurationsinformationen (Steuer-Register A) auf die einzelnen Line-Cards 20 (Hybride) zu schreiben. Die C- und T-Kanäle 21,31 befinden sich dort, wo das Übertragungs- und Empfangs-Filter zur Verstärkung und Dämpfung bezüglich des Codierers 41 gesteuert wird. Dies befindet sich auch dort, wo die CODEC-Betriebsweisen "Normal", "digitale Rückschleife", "analoge Rückschleife" und "keine Versorgung" spezifiziert werden.

Der Signalkanal 32 wird, wie beim C- und T-Kanal 31, zur Line-Card 20 geleitet. Der Kanal 32 wird an der Gruppensteuerung 30 demultiplext und wieder als sieben einzelne 2 Mb-Kanäle 22 verteilt, einer für jede Line-Card 20. Die Signal-Kanal-Lesefunktion versorgt die Hauptsteuereinheit 104 mit Signatur-Informationen über die Line-Cards 20, Anzeige einer durchgebrannten Sicherung und Anzeige-Gruppensteuerung 30 A oder B aktiv.

Das System gemäß der Erfindung unterstützt vorzugsweise 18 Leitungsfächer, 4032 Anschlüsse. Die Maximalforderung besteht nach einer vollständig konfigurierten Zwischenverbindung, wo 2016 Netz-Interface-Module und 2016 Teilnehmer-Interface-Module unterstützt werden.

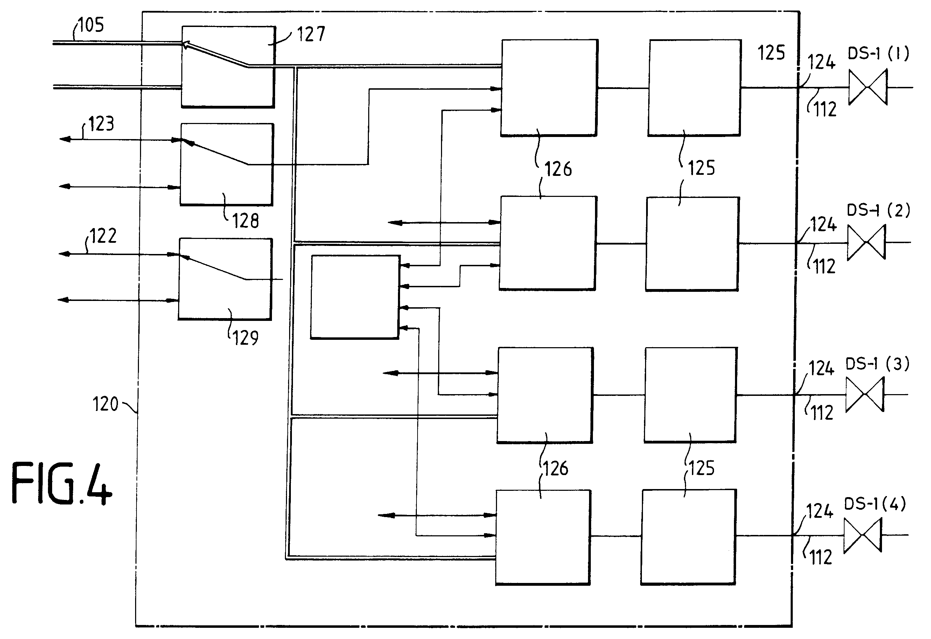

Die Figur 4 zeigt ein Vierfach-DS1-Modul 120. Das DS1-Modul 120 ist eine digitale Line-Card mit 32 digitalen Anschlüssen, die mit den digitalen Leitungen 112 verbunden sind. Die digitalen Leitungen 112 tragen digital komprimierte Datensignale mit einer DS1-Rate (1,55 Mb/s). Wie die Figur 4 zeigt, hat das digitale Modul 120 vier Anschlüsse 124 für jede der DS1-Leitungen 1 bis 4. Jeder Anschluß 124 ist über einen Datenübertragungs-Puffer 125 mit einem Kombinierer 126 verbunden. Der Kombinierer 126 kombiniert die ausgehenden Sprachfrequenz- und Signalisierungs-Daten vom Zwischenverteiler 1 und trennt die eingehenden Sprachfrequenz- und Signalisierungs-Daten zur Eingabe in den Zwischenverteiler 1. Die Kommunikationssignale können auch im Kombinierer 126 getrennt oder kombiniert werden. Die Sprachfrequenz-Signale werden von der Sprachfrequenz-Auswahleinheit 127 über den PCM-VF-Bus 123 geleitet. Die Kommunikationssignale werden durch die Kommunikations-Auswahleinheit 127 (zum Auswählen des Systems A oder B, welches auch immer von ihnen aktiv ist) und über den Kommunikationsbus 105 geleitet. Die Signalisierungs-Daten werden über den Signalbus 122 ausgesandt. Des weiteren ist ein Konfigurations- und Testbus 131 (Fig. 2) in der beschriebenen Art des Konfigurations- und Testbusses 121 vorgesehen. Die Signal-Auswahleinheit 129 und die Sprachfrequenz-Auswahleinheit 128 wählen entweder das System A oder das System B aus, je nachdem, welches aktiv ist.

Die Fig. 5 zeigt die digitale Gruppensteuerung 130, welche die Signale zu den Line-Cards 20 leitet und von den digitalen Line-Cards 20 Signale empfängt, und die Signale zu oder von der TSI-Einheit 103 oder der Signal-TSI-Einheit 102 weiterleitet. Die Signale von (zu) den Line-Cards 20 können in der Einheit 134 gemultiplext (demultiplext) werden zur Weiterleitung über den Signalbus 132 an die Signal-TSI-Einheit 102. Die Sprachfrequenz-Signale werden über den Bus 133 mit der VF-TSI-Einheit 103 und mit einem Konfigurations- und Testbus 131 verbunden, der die digitale Gruppensteuerung 130 mit dem Test- und Konfigurationsmodul 101 verbindet. Die Ausgänge 135 der Einheit 134 führen zu den Anschlüssen 124 des Vierfach-DS1-Moduls 120 (Fig.4).

Die Fig. 6 zeigt den Aufbau der Signal-TSI-Einheit 102. Die TSI-Einheit 102 ist ein Signalisierzeitkanal-Interface mit vollständigem Zugang, in der Signale von den Netzleitungen 15 wie auch von den Teilnehmerleitungen 12 in die TSI-Einheit 102 geführt werden. Die Signaldaten für die Netzleitungen 15 wie auch für die Teilnehmerleitungen 12 werden von der TSI-Einheit 102 ausgegeben. Dies ermöglicht Flexibilität einschließlich der Möglichkeit der Verbindung von Netzleitung 15 zu Netzleitung 15.

Die TSI-Einheit 102 enthält einen Mikroprozessor 200. Der Mikroprozessor 200 ist mit der Vermittlungsstelle 2 über eine zugewiesene Leitung verbunden (wie beispielsweise ein zugewiesener Zeitkanal). Die Vermittlungsstelle 2 steuert dann den Mikroprozessor 200 über einen Software-Netzmanager zum Bestimmen der Zeitkanäle für die Signalisierungs-Daten und andere Daten (Sprachfrequenz-Daten).

Die von den Line-Cards 20 empfangenen 8-Bit-Pakete oder Bytes können in einem Bit-Pack-Verfahren behandelt werden, wobei Statusänderungen in den diversen Leitungen erfaßt und der Vermittlungsstelle 2 und dem Teilnehmer 10 mitgeteilt werden können.

Die Signalisierungs-Daten von den Line-Cards 20 erreichen die TSI-Einheit 102 über den 8 Mb/s-Bus 32, wie oben beschrieben und in der Fig.2 dargestellt ist. Die Daten werden demultiplext auf eine Datenrate von 2 Mb/s und dann an einen Seriell/Parallel-Wandler übergeben. Die Daten verlassen den Seriell/Parallel-Wandler als 8 Bit breite Pakete mit einer 16 MHz-Rate. Die Daten werden dann sequentiell über einen sequentiellen Zähler 205 in beide Speicher 202,204 geladen.

Der untere in Fig.6 gezeigte Weg wird von der Software für die Ereigniserkennung benutzt. Die zwei Anschlüsse des Speichers 204 werden bankgeschaltet und die Daten werden in Bit-Paketen in weitere zwei Anschlüsse des Speichers 204 zum Lesen durch den Mikroprozessor 200 geladen. Der Mikroprozessor 200 für die Datenauswertung und Datenbestimmung weist einen Adressenausgang 201 und einen Dateneingang 203 zum Speicher 204 sowie einen Adressenausgang 207 und einen Datenausgang 209 zum Verbindungsspeicher 206 auf. Die Bit-Pakete werden an Speicherpositionen angeordnet, wo eine Bit-Pack-Vorrichtung das niederwertigste Bit und dann das nächst-niederwertigste Bit ausliest usw.. Das Bit-Packen wird an allen Bits ausgeführt und wird bankgeschaltet, wenn alle 2048 Zeitkanäle geladen sind. Der Mikroprozessor 200 kann dann zur Ereigniserkennung mit einer Software benutzt werden, die neue Signalisierungs-Daten für die ausgehende Line-Card über den Verbindungsspeicher 206 und die Nachschlagtabellen 208 ausgeben kann.

Gemäß einem vorteilhaften Merkmal der Erfindung kann der Mikroprozessor 200 in einer begrenzteren Art und Weise eingesetzt werden, oder ein Vergleich kann auf Basis des Ausgangs des oben erläuterten Software-Systems durchgeführt werden, wobei die Daten über einen weiteren Zeitkanal-Austausch ausgegeben werden, wie im folgenden beschrieben ist. Die über den Kanal 32 eingehenden Daten (Netz-Signalisierungs-Daten und Teilnehmer-Signalisierungs-Daten) können über den oberen in Fig. 6 gezeigten Weg zum Speicher 202 geführt werden. Der Speicher 202 hat vorzugsweise zwei Bänke, die ein Schreiben und Lesen ohne Probleme erlauben. Der Mikroprozessor 200 (unter Steuerung durch die Vermittlungsstelle 2) stellt Zeitkanäle zur Verfügung, wobei die Adresse der Daten im Speicher 202 im Verbindungsspeicher 206 entsprechend den aufgestellten Zeitkanälen gespeichert werden. Ein sequentieller Zähler 210 inkrementiert sequentiell den Verbindungsspeicher 206, wodurch Verbindungsdaten vom Speicher 202 entsprechend der Verbindungsplan-Adresse in der Zeit gelesen werden. Diese Daten werden dann Teil einer Adresse zusammen mit höheren Bits vom Verbindungsspeicher 206.

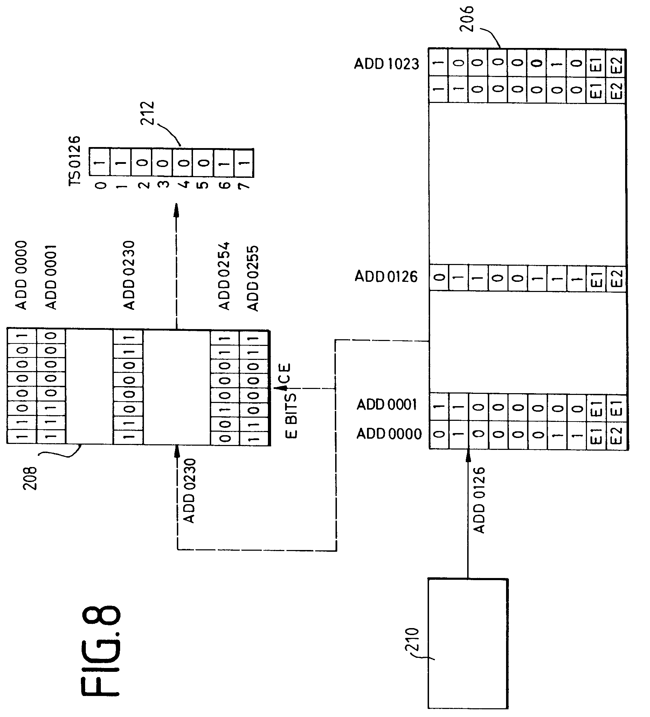

Die Verbindungsdaten und die höheren Bits können dann zu einem Code der ausgehenden Netzwerk- oder Teilnehmer-Line-Card (Daten-Grooming) geändert werden, falls notwendig. Dies geschieht durch die Nachschlagtabellen 208, die einen Plan für entsprechende neue Daten 212 (Fig.8) zum Datenauslesen aus dem Verbindungsspeicher 206 liefern. Die neuen Daten entsprechen Signaldaten für eine ausgehende Line-Card 20, und die aus dem Verbindungsspeicher 206 ausgelesenen Daten entsprechen den Daten für eine eingehende Line-Card 20.

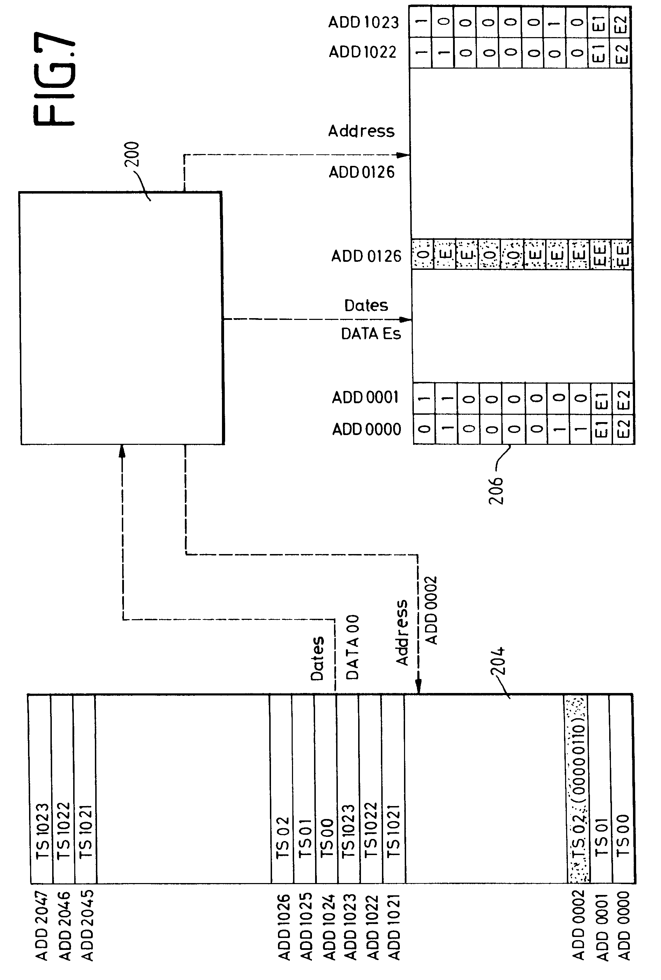

Wie in der Fig. 7 gezeigt ist, empfängt der Speicher 204 Daten auf der Grundlage der Adresse der Line-Card 20. Der Speicher 204 hat vorzugsweise zwei Bänke, wobei eine Bank beschrieben wird und die andere Bank zum Vermeiden von Konflikten dient. Die Daten werden auf eine Seite (links) des Speichers 204 geschrieben und an der gleichen Position im Speicher 204 in einer unterschiedlichen Bank (wie beispielsweise Daten bei ADD 0002) im Mikroprozessor 200 gelesen. Der Mikroprozessor 200 kann dazu benutzt werden, die Daten auszuwerten und auf den neuesten Stand zu bringen oder Signaldaten zu erzwingen, wenn ein Problem erkannt wird.

Wenn beispielsweise ein Rufton aufgrund eines Fehlers oder einer Fehlfunktion auf einer Teilnehmerleitung 12 vorhanden ist (das Telefon läutet, es liegt aber kein Anruf vor), können neue Signaldaten erzwungen werden, um das Problem (Rufton ohne Anruf) zu vermeiden, während das Problem untersucht wird. Der Mikroprozessor 200 schreibt neue Daten in eine Adressenposition des Verbindungsspeichers 206. Die Adressenposition wird von der Vermittlungsstelle 2 bestimmt und liefert den Zeitkanal für die ausgehenden Daten. Beispielsweise werden Daten von ADD 0002 ausgewertet und neue Daten werden in ADD 0128 des Verbindungsspeichers 206 geschrieben, was eine Adresse z.Zt. eines entsprechenden zu sendenden Datencodes darstellt.

Wie die Fig. 8 zeigt, liest der sequentielle Zähler 210 sequentiell Daten aus dem Verbindungsspeicher 206, die eine Adresse für die folgenden Zeitkanäle bilden. Dann wird die Nachschlagtabelle 208 benutzt, wobei die Daten vom eingehenden Speicher 202 auf der Basis der Plazierung im Verbindungsspeicher 206 gelesen werden (eine Adresse in der Zeit). Die Daten werden dann Teil der Adresse zusammen mit den höheren Bits aus dem Verbindungsspeicher 206 für die Nachschlagtabelle 208 mit den Ausgangsdaten oder neuen Daten 212 in dieser ausgewählten Adressenposition. Die neuen Daten 212 werden dann zu einem Parallel/Seriell-Wandler ausgegeben, wobei die Daten die Nachschlagtabellen 208 als ein 8 Bit breites Paket verlassen und zu seriellen Daten umgewandelt werden und dann vorzugsweise auf eine höhere Rate gemultiplext werden (z.B. 8 Mb/s), mit der sie über den Bus 32 oder den Bus 132 zu einer Line-Card 20 oder 120 geführt werden.

Die Verarbeitung der Daten für den Zeitkanal-Austausch, wie oben erläutert, liefert mehrere Vorteile. Ein wichtiger Vorteil des Austauschs aus Nachschlagtabellen ist die Freimachung des Mikroprozessors für andere Aufgaben. Als weiterer Vorteil kann ein Hardware-Interrupt-Kreis zusätzlich zu den Nachschlagtabellen benutzt werden, um den Mikroprozessor zu informieren, wenn ein illegales Datenpaket von den Nachschlagtabellen empfangen wurde. Da die Nachschlagtabellen die notwendigen Bit-Pakete bezüglich der diversen Signalisierungs-Daten haben, kann ein Fehler sofort entdeckt werden. Da die oberen beiden Bits der Nachschlagdaten nicht zur ausgehenden Adresse geschickt werden, kann dies zur Anzeige einer gültigen Datenadresse benutzt werden. Die Software kann dann diese Möglichkeit ausnutzen, indem die oberen beiden Bits einer gültigen Datenadresse mit "Eins" und ungültige Datenadressen mit "Null" an jeder Position geladen werden. Falls die "Null" an die höchste Stelle geladen wird, kann ein Interrupt am hohen Niveau ausgelöst werden. Falls die "Null" in die nächsthöchste Position geladen wird, kann ein Interrupt am niedrigen Niveau ausgelöst werden. Flexibilität kann hinzugefügt werden, um den Interrupt-Kreis für jede Zwischenverbindung zu aktivieren und zu deaktivieren. Der Interrupt am hohen Niveau kann maskiert werden, nachdem ein Interrupt aufgetreten ist, um die Erkennung einer Rückkehr zum normalen Interrupt zu ermöglichen (wenn beispielsweise eine Line-Card entfernt und ersetzt wurde). Während besondere Ausführungsformen dargestellt und näher beschrieben wurden, um die Anwendung der Prinzipien gemäß der vorliegenden Erfindung zu illustrieren, ist es offensichtlich, daß die Erfindung auch auf andere Weise ausgeführt werden kann, ohne daß von derartigen Prinzipien abgewichen wird.

### Bezugszeichenliste

- 01: Zwischenverteiler
- 02: Vermittlungsstelle
- 10: Teilnehmer
- 12: Teilnehmerleitung
- 15: Netzleitung
- 20: Line-Card
- 21: C- und T-Kanal
- 22: Kanal
- 23: Kanal
- 30: Gruppensteuerungsmodul
- 31: C- und T-Kanal
- 32: Bus
- 33: Gruppensteuerungsmodul
- 34: Anschluß
- 38: Datenabtrenner
- 39: Statussignalabtrenner
- 40: A/D-Wandler
- 41: Codierer/Decodierer
- 50: Integrator
- 100: gemeinsame Steuereinheit
- 101: Test- und Konfigurationsmodul
- 102: Signalisier-TSI-Einheit
- 103: Zeitkanal-Interface-Einheit
- 104: Hauptsteuereinheit
- 105: Kommunikationsbus
- 106: Bedienungs-Interface
- 107: Frontplatte
- 112: digitale Leitung
- 120: Vierfach-DS1-Modul (dig. Line-Card)
- 122: Bus
- 123: Bus
- 124: Anschluß
- 125: Puffer
- 126: Kombinierer
- 127: Auswahleinheit
- 128: Auswahleinheit
- 129: Auswahleinheit
- 130: Gruppensteuerung
- 131: Bus
- 132: Bus
- 133: Bus
- 134: Einheit
- 135: Ausgänge
- 200: Prozessor
- 201: Ausgang
- 202: Speicher
- 203: Eingang
- 204: Speicher
- 205: Zähler
- 206: Speicher
- 207: Ausgang
- 208: Nachschlagtabelle
- 209: Ausgang
- 210: Zähler
- 212: neue Daten

## Patentansprüche

1. Digitaler elektronischer Zwischenverteiler für Nachrichten- und Datenübertragungssysteme, gekennzeichnet durch
- eine Vielzahl von Line-Cards (20), einschließlich von mit einer Netzleitung (15) verbundenen Line-Cards (20) und mit einer Teilnehmerleitung (12) verbundenen Line-Cards (20), wobei die gesamte Netzleitung (15) und die Teilnehmerleitung (12) Signale mit einem Datenteil und einem Statussignalteil übertragen,
- ein Trennmittel (40) zum Abtrennen des Datenteils vom Statussignalteil,
- ein Codiermittel (41) zum Codieren des Statussignalteils, um Statussignal-Bit-Pakete auf der Grundlage der empfangenen Statussignale zu liefern und
- ein Statussignal-Zeitkanal-Austauschmittel (102) zum Empfangen der Statussignal-Bit-Pakete und zum Aussenden der Statussignal-Bit-Pakete auf der Grundlage von zugeordneten Zeitkanälen zu einer weiteren Line-Card (20), wobei das Statussignal-Zeitkanal-Austauschmittel (102) einen Verbindungsspeicher (206) mit Adressenpositionen entsprechend den Zeitkanälen und einen Speicher (202) mit zwei Anschlüssen zum Empfangen der Statussignal-Bit-Pakete und zum schreiben der Bit-Pakete auf der Grundlage der Adressenpositionen des Verbindungsspeichers (206) aufweist.

2. Digitaler elektronischer Zwischenverteiler nach Anspruch 1, dadurch gekennzeichnet, daß das Statussignal-Zeitkanal-Austauschmittel (102) Nachschlagtabellen (208) zum Zuweisen von eingehenden Daten zu neuen Daten (212) für eine ausgewählte Line-Card (20) aufweist.

3. Digitaler elektronischer Zwischenverteiler nach Anspruch 1, dadurch gekennzeichnet, daß das Statussignal-Zeitkanal-Austauschmittel (102) einen Mikroprozessor (200) zum Schreiben von Signalisierungs-Daten direkt an eine ausgehende Adresse aufweist.

4. Digitaler elektronischer Zwischenverteiler nach Anspruch 1, gekennzeichnet durch
- ein Multiplexmittel zum Multiplexen von Signalen von den Line-Cards (20),
- einen die Line-Cards (20) mit dem Statussignal-Zeitkanal-Austauschmittel (102) verbindenden Signalbus (32),
- ein Demultiplexmittel zum Demultiplexen der Signale von dem Signalbus (32) zur Bildung eines seriellen Datenflusses und
- ein Seriell/Parallel-Wandlungsmittel zum Umwandeln des seriellen Datenflusses in parallele Datenpakete.

5. Digitaler elektronischer Zwischenverteiler für Nachrichten- und Datenübertragungssysteme, gekennzeichnet durch
- eine Vielzahl von Line-Cards (20), einschließlich von mit einer Netzleitung (15) verbundenen Line-Cards (20) und mit einer Teilnehmerleitung (12) verbundenen Line-Cards (20), wobei die gesamte Netzleitung (15) und die Teilnehmerleitung (12) Signale mit einem Datenteil und einem Statussignalteil übertragen,
- ein Trennmittel (40) zum Abtrennen des Datenteils vom Statussignalteil,
- ein Codiermittel (41) zum Codieren des Statussignalteils, um Statussignal-Bit-Pakete auf der Grundlage der empfangenen Statussignale zu liefern und
- ein Statussignal-Zeitkanal-Austauschmittel (102) zum Empfangen der Statussignal-Bit-Pakete und zum Aussenden der Statussignal-Bit-Pakete auf der Grundlage von zugeordneten Zeitkanälen zu einer weiteren Line-Card (20), wobei das Statussignal-Zeitkanal-Austauschmittel (102) einen Verbindungsspeicher (206) mit Adressenpositionen entsprechend den Zeitkanälen und einen Speicher (202) mit zwei Anschlüssen zum Empfangen der Statussignal-Bit-Pakete und zum Schreiben der Bit-Pakete auf der Grundlage der Adressenpositionen des Verbindungsspeichers (206) und ein Nachschlagtabellenmittel (208) zum Zuweisen jedes der Bit-Pakete an ein neues Datenpaket für die ausgewählte Line-Card (20) zur Ausgabe der neuen Daten auf der Grundlage dieser Zuweisung aufweist .

6. Verfahren für die Nachrichten- und Datenübertragung zur Verbindung von Line-Cards (20), einschließlich von mit einer Netzleitung (15) verbundenen Line-Cards (20) und mit einer Teilnehmer-Leitung (12) verbundenen Line-Cards (20), wobei die Netzleitung (15) und die Teilnehmerleitung (12) Signale mit einem Datenteil und einem Statussignalteil übertragen, dadurch gekennzeichnet, daß
- der Datenteil vom Statussignalteil abgetrennt wird, daß
- der Statussignalteil codiert wird, um Statussignal-Pakete auf der Grundlage der empfangenen Statussignale zu liefern und daß
- die Statussignal-Informationen auf der Grundlage zugewiesener Zeitkanäle an eine weitere Line-Card (20) übertragen werden, indem die besagten Statussignal-Bit-Pakete in einen Speicher (202,204) mit zwei Anschlüssen geschrieben werden, Adressenpositionen entsprechend den Zeitkanälen in einem Verbindungsspeicher (206) aufgestellt werden und die Bit-Pakete aus dem Speicher (202,204) auf der Grundlage der Adressenpositionen des Verbindungsspeichers (206) geschrieben werden und jedes der Bit-Pakete einem neuen Datenpaket für eine ausgewählte Line-Card (20) zugewiesen wird zur Übertragung der neuen Daten (212) auf der Grundlage dieser Zuweisung.
